# EUROPEAN PATENT APPLICATION

(11) **EP 2 367 161 A1**
(43) Date of publication of application: **21.09.2011**
(21) Application number: 10290145.1
(22) Date of filing: 18.03.2010
(51) Int. Cl.: G08G 1/01, H04W 60/04

(54) **A sensor, and a method of a sensor detecting a user terminal that is in idle mode connected to a base station**

(71) Applicant: Alcatel Lucent, 75008 Paris (FR)
(72) Inventor: Kennedy, Irwin O., Londonderry, BT47 6HY (GB); Claussen, Holger, Straffan, Co. Kildare (IE)
(74) Representative: Sarup, David Alexander

(57) **Abstract**

A method of a sensor detecting a user terminal that is in idle mode connected to a base station, the method comprising: the user terminal moving into the coverage area of the sensor, the sensor transmitting a signal that triggers a request from the user terminal for location area update, the sensor responding with a request for the identifier of the user terminal, the user terminal sending its identifier in reply, the sensor recording the identifier and not completing the location area update so that the user terminal remains connected to the base station.

## Description

### Field of the Invention

The present invention relates to telecommunications, in particular to wireless telecommunications.

### Description of the Related Art

A variety of approaches are known to monitor vehicular traffic on roads. They include the use of cameras, pneumatic tube sensors, inductive loop sensors, and Bluetooth devices. Each approach has advantages and disadvantages.

For example, traffic cameras mounted at the roadside must be provided with both electricity and a backhaul data link to a remote station where the data is gathered and processed. A backhaul data link having a high bandwidth, such as a wireless data link or fibre optic cable, is required. The data is processed in a manner which is either laborious in human terms, for example a person to watch a video feed, or complex and prone to error, such as involving the use of automated counting systems.

In another approach, a pneumatic tube is placed across a road and a vehicle is detected by changes in pressure detected by a pressure switch. Two such tubes laid in parallel are required to determine vehicle directions. These suffer from poor accuracy as they count wheels or wheel pairs, not vehicles. A correction factor is applied based on an estimate of the average number of axles and hence wheel pairs, vehicles might have (two for most cars, three or more for most trucks). They have trouble registering signals in rapid sequence, and are liable to mechanical damage in heavy traffic or by vandels. Installation of this equipment requires the road to be closed temporarily.

A further approach involves an inductive loop. In this approach, a groove is cut in a road surface into which a coiled conductive loop is placed. The loop is connected to a power source and counting equipment then epoxy resin is used to fill the remaining space in the groove. This is labour intensive, requires the road to be closed during installation and is not suitable for measuring vehicle direction or speed.

Another approach involves optical sensors. Dust, water and snow can cause these to stop working effectively.

A further approach involves Bluetooth signalling detection. In practice, only a small fraction of vehicles contain a mobile terminal that is Bluetooth visible. For example, many mobile phones lack Bluetooth capability or are not switched-on in a Bluetooth-detectable mode.

### Summary

The reader is referred to the appended independent claims. Some preferred features are laid out in the dependent claims.

An example of the present invention is a method of a sensor detecting a user terminal that is in idle mode connected to a base station in a location area, the method comprising:
the user terminal moving into the coverage area of the sensor,
the sensor transmitting a signal that triggers a request from the user terminal for location area update,
the sensor responding with a request for the identifier of the user terminal,
the user terminal sending its identifier in reply,
the sensor recording the identifier and not completing the location area update so that the user terminal remains connected to the base station.

Preferred embodiments of the present invention provide a user terminal-based approach to traffic sensing where a traffic sensor lacks telecommunications core network connection. The preferred traffic sensor may be used to monitor vehicle traffic flows.

In preferred embodiments, almost every vehicle includes a user terminal. Also, in some embodiments, a low-bandwidth backhaul connection from the sensor to a central location is sufficient for data to be collected centrally. In preferred embodiments, the sensor broadcasts in the same downlink frequency channel as the cellular base station in order to solicit a response from a user terminal in idle mode. The response includes an identifier of the user terminal. The identifier may be used to identify the same vehicle at multiple points, hence building up a rich set of information about traffic flows.

### Brief Description of the Drawings

Embodiments of the present invention will now be described by way of example and with reference to the drawings, in which:
Figure 1 is a diagram illustrating a telecommunications network according to an embodiment of the present invention,
Figure 2 is a diagram illustrating the sensor shown in Figure 1 in more detail,
Figure 3 is a message sequence diagram illustrating communications between the sensor and the user terminal shown in Figure 1,
Figure 4 is a diagram further illustrating operation of the sensor shown in Figures 2 and 3, and
Figure 5 is a diagram illustrating a scenario in which the sensor shown in Figures 1 to 4 is used.

### Detailed Description

The inventors realised that nowadays most moving road vehicles carry a mobile user terminal for wireless telecommunications that is mostly in idle mode and hence can be sensed for vehicular traffic monitoring purposes.

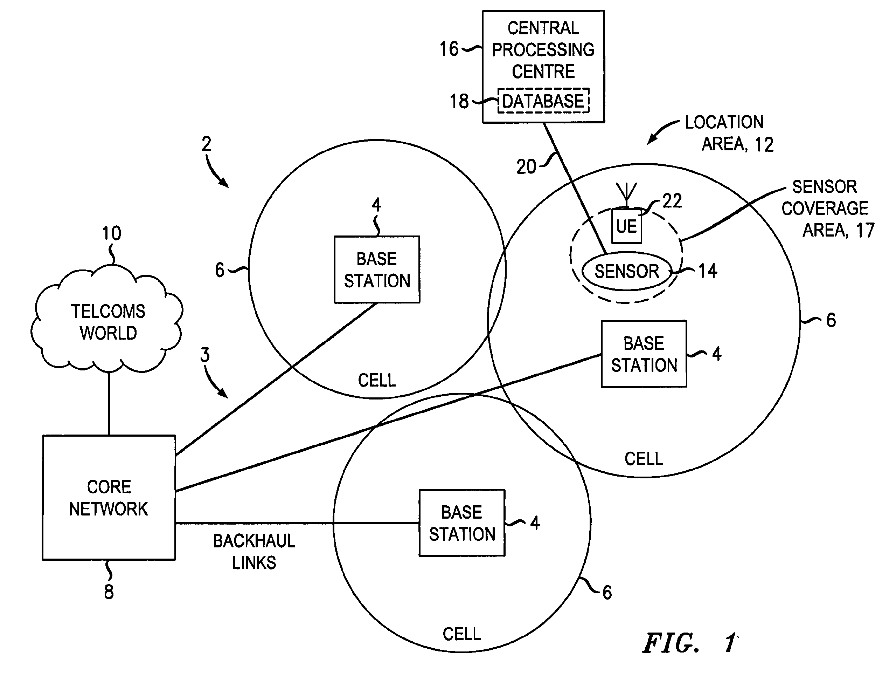

As shown in Figure 1, a telecommunications network 2 includes a cellular network 3 consisting of macro-cellular base stations 4 each having an associated radio coverage area referred to as a cell 6. The macro-cellular base stations 4 are each connected to a core network 8 of the cellular network 3. The core network 8 is connected to the rest of the telecommunications world 10. Several macrocells 6 form a single location area 12.

Within a cell 6, a traffic sensor 14 is provided having a sensor coverage area 17 and being connected via a low-bandwidth backhaul link 20, of Digital Subscriber Line (DSL) type in this example, to a central processing centre 16. The central processing centre 16 includes a database 18.

User terminals 22 enter and leave cells 6 and enter and leave the sensor ceverage area 17. In Figure 1, only one user terminal 22 is shown for simplicity.

In use, as explained in more detail below, identifying information is transmitted from a UE in the sensor coverage area 17 to the sensor where that information is received and passed via the backhaul link 20 to the central processing centre 16 for subsequent processing.

### The Traffic Sensor

As shown in Figure 1, the traffic sensor 14, unlike the base station 4, has no direct connection to the core network 8. The traffic sensor 14 uses the same radio frequency as the cell 6 of the base station 4 in which the traffic sensor 14 is situated, but without causing interference detrimental to the performance of the network as explained further below.

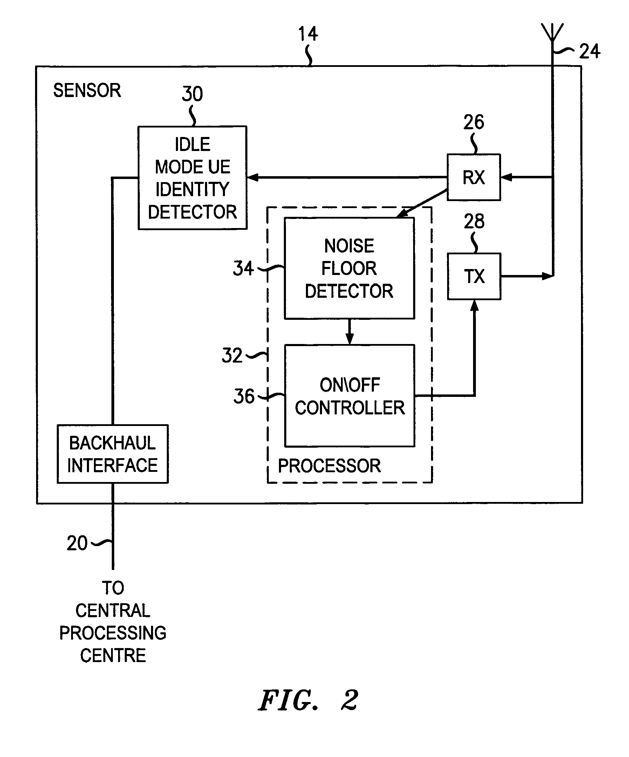

As shown in Figure 2, the sensor 14 includes an antenna 24 connected to a receiver 26 and transmitter 28. The receiver 26 is connected to an idle mode UE identity detector 30 and a processor 32.

The processor consists of a noise floor detector 34 connected to a transmitter on/off controller 36 that is connected to the transmitter 28. The operation of the processor 32 will be explained in more detail below.

The idle mode UE identity detector 30 is connected to a backhaul interface 38 connected to the backhaul link 20 to the central processing centre (not shown in Figure 2).

### Location Area Update

When a user terminal (often denoted a user equipment, UE) moves into a new cell 6, the UE informs the telecommunications network 2 that the UE has so moved. Specifically, a location area update procedure of known type is undertaken whereby the network 2 is informed that the UE 22 has moved into a location area 12 that covers a small group of cells 6. This allows the network 22 to page the UE within just a small group of cells rather than needing to page in all cells in the network.

A location area is constituted by several cells so that the UE need not perform a location area update every time it changes cell. This may be considered as a trade-off between inefficient paging by the network, as paging may still occur in some cells in which the UE 22 is not situated, and conserving battery life of the user terminal, by avoiding location area update upon every change of cell.

### Sensing User Terminals in Idle Mode

The transmitter 28 of the sensor 14 generates pilot signals and other messages to solicit a location area update from user terminals in the sensor coverage area 17.

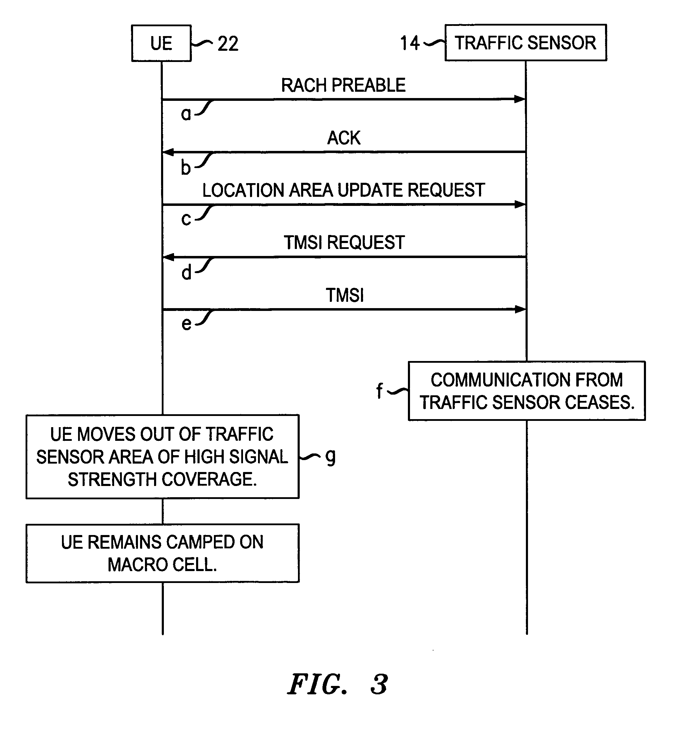

When a switched-on user terminal that is not in an active call, and so is in idle mode, enters the sensor coverage area 17, the user terminal receives the pilot signals from the sensor 14 and measures the received signal strength of those pilot signals. The user terminal determines that its received signal strength from the sensor 14 is higher than from any of the base stations 6. Accordingly, as shown in Figure 3, the user terminal 22 initiates connection to the sensor 14, and a location area update procedure with the sensor 14. This procedure includes decoding broadcast messages from the sensor 14 and the sensor detecting the user terminal's identity.

As shown in Figure 3, specifically, the user terminal 22 initiates the connection to the sensor by sending (step a) a Universal Mobile Telecommunications System (UMTS) Random Access Channel (RACH) preamble. The sensor 14 replies (step b) with an Acknowledgement (ACK). The user terminal then sends (step c) a Location Area Update request to the sensor. The sensor replies (step d) with a request to the user terminal of the identity of the user terminal. The user teminal 22 replies by sending (step e) its identity to the sensor 14.

In this example, the user terminal's identity is the Temporary Mobile Station Identifier (TMSI) of the user terminal, which is periodically updated (not shown) by the network to protect privacy. The relationship between the periodically changing TMSI and the permanent and unique International Mobile Subscriber Identity (IMSI) is, of course, stored (not shown) in the core network 8.

Referring to Figures 2 and 3, once the identity (TMSI) of the user terminal is received by the sensor 14 is detected by detector 30 in the sensor 14, the sensor 14 terminates the location update procedure by simply ceasing (step f) further communication with the user terminal. In an otherwise similar alternative embodiment (not shown), the location area update procedure is terminated by the sensor instead sending a busy signal to the user terminal.

The procedure of connection to, and location area update in respect of, the sensor is not completed so the user terminal remains camped on (i.e idle mode connected to) base station 4 of the macrocell 6.

In due course, the user terminal moves out (step g) of the sensor coverage area 17.

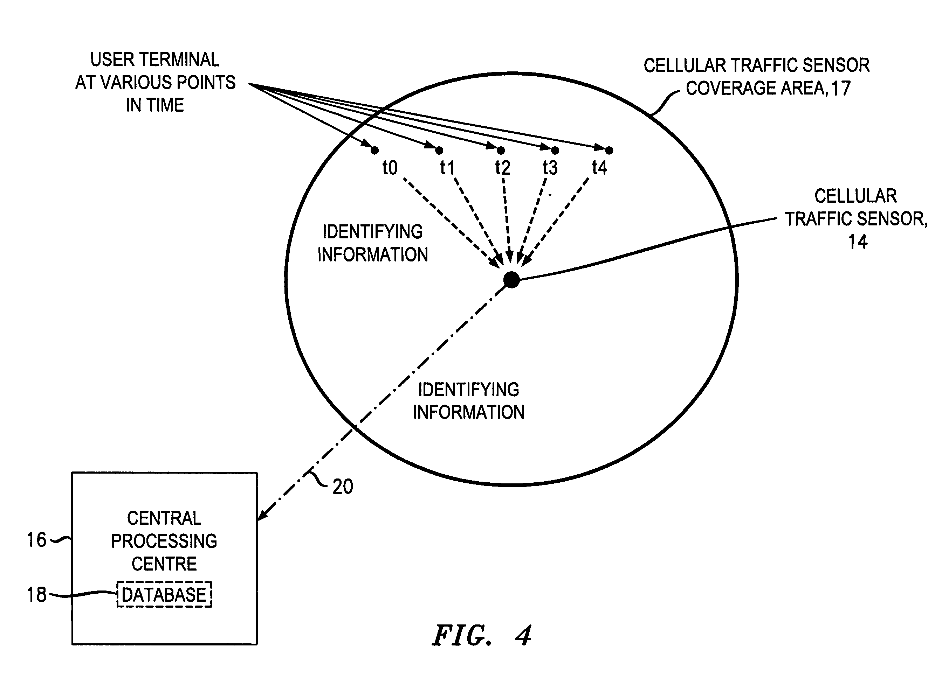

As shown in Figure 4, as a user terminal moves through the coverage area 17 of the sensor 14, it is likely to be detected multiple times (t0, t1, t2, t3, t4). At each time the identity of the user terminal is transmitted to the sensor, and then forwarded by the sensor 14 to the central processing centre 16. If the user terminal is only detected for a brief duration, it is assumed to be traveling fast. Conversely if it is detected for a long period, it is assumed to be slow or stationery.

### Active Mode

When a user terminal 22 is detected as being in the sensor coverage area 17 but in active mode, in other words in an active voice- or data- connection with a macrocellular base station 4, then it is necessary to stop the sensor 14 transmitting. This is because the sensor 14 uses the same frequency (more specifically the same downlink frequency band) as the macrocellular base station 4 so its transmissions would otherwise appear as interference to the user terminal 22 connected to the base station 4, resulting in a call quality degradation or even call failure.

Accordingly, referring back to Figure 2, the signal received by the receiver 26 of the sensor 14 from the user terminal is detected by the noise floor detector 34. The noise floor detector 34 continuously monitors the noise signal received at the traffic sensor in the uplink band and passes that information to the on/off controller 36. The controller 36 operates such that upon determining that the detected noise signal exceeds a given threshold, indicating that the detector 34 detects that a user terminal in active mode is entering the sensor coverage area 17, then the controller 36 send a control signal to the transmitter 28 of the sensor 14 so as to turn off transmission. The noise level rises further as the user terminal approaches the sensor then starts to drop as the user terminal gets further from the sensor. Upon the detected noise signal dropping below a given threshold, the controller determines that sensor transmission can resume so sends a control signal to the transmitter 28 re-enabling its operation.

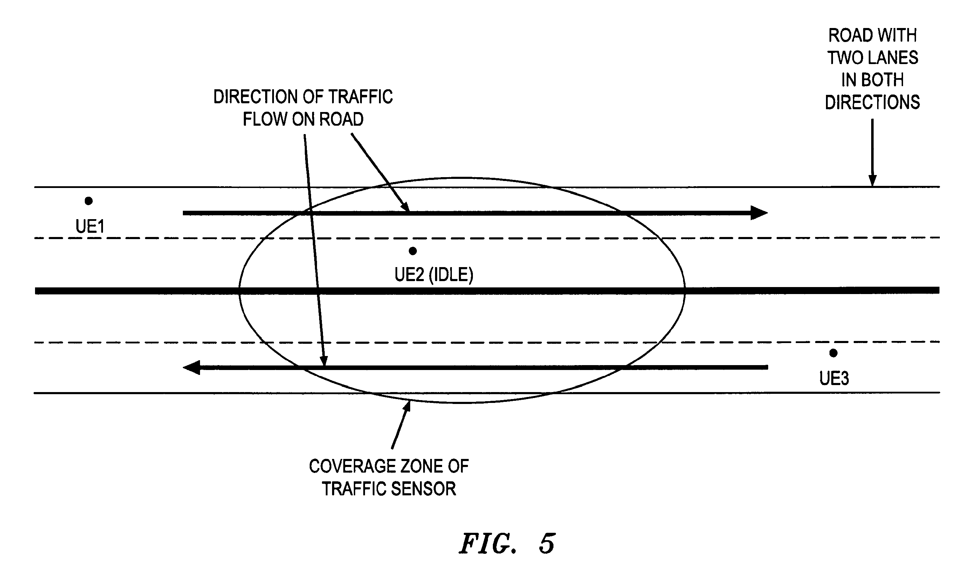

An example scenario is shown in Figure 5.

As shown in Figure 5, a sensor (not shown) has a coverage area 17' spanning a road having two lanes in each direction (four lanes in total). There are three user terminals denoted UE1, UE2, UE3. Of these, the first user terminal UE1 and second user terminal UE2 are in vehicles travelling in one direction, whilst the third user terminal UE3 is in a vehicle travelling in the opposite direction. The first user terminal is moving towards the coverage area 17', the second user terminal UE2 is in the coverage area, and the third user terminal UE3 is moving towards the coverage in the opposite direction. As explained above, the identity of UE2 is determined by the sensor sending a location area update request to trigger the user terminal to send its TMSI to the sensor. If either of the first and third user terminals is in active mode, this is only possible before the active mode user terminal enters the coverage area and so the sensor is prevented from transmitting. Alternatively, if the first and third terminals are in idle mode, the sensor continues to transmit regardless of whether either is in the coverage area 17'.

### Use of data

For each user terminal identity detection, the identity is recorded together with a record of the time at which that detection was made (a "time stamp").

Information of many user terminals is collected and combined to estimate total traffic flow and typical travel speeds. It is assumed that a predetermined percentage of vehicles include a user terminal in idle mode. In particular, the total number of different user terminals, and hence vehicles, detected in a time interval gives a traffic flow rate.

A record is also kept of the noise thresholds applied, total time for which the sensor is off, and total time for which the sensor is on.

This data is used by the sensor to improve its performance and reduce detrimental effects to the macrocell. This is because the sensor when transmitting causes interference to the base station 4, as the sensor transmits in the same RF frequency band as the base station 4. This can result in dropped calls, and interference to user terminals in idle mode preventing them from successfully receiving paging messages from a base station of the network and preventing them establishing new calls with the network.

Accordingly, the sensor acts to adjust its parameters, such as transmit power and times for which the sensor is on and off, so as to identify as many passing user terminals as possible whilst minimising detrimental effects such as interruptions due to interference to call connections to the macro-cellular network.

### Some Variants

In some further embodiments, multiple sensors of the type described above are provided along a road, and data from them is collected enabling speed and direction of travel of the user terminal to be estimated accurately. A user terminals identifier is then used to identify the same vehicle at multiple points along the road.

In some embodiments, rather than the sensor being connected to the central processing centre by a Digital Subscriber Line (DSL) backhaul link, the sensor is connected via a cellular call connection to the macro-cellular base station so that the information is passed via the base station and core network to the central processing centre.

In some embodiments, rather than receiving the TMSI of the user terminal, the sensor instead receives the IMSI of the user terminal.

In some embodiments, rather than receiving the TMSI or IMSI to identify the user terminal, the sensor instead look to the RF fingerprint of the user terminal, in other words the unique transmission characteristic of its transmitter applied to the intended RF signal when transmitting. This characteristic can be seen in received signals and is an identifier of the transmitting user terminal. This is particularly useful in networks in which the TMSI or IMSI is not permitted to be provided by the user terminal, For example, in some systems prior authentication is required of a sensor before a user terminal may send its TMSI or IMSI. In some of these systems, such prior authentication would involve communications with the core network and so is not desirable, so use of the RF fingerprint provides a useful alternative.

The sensor described in respect of Figures 1 to 5 has an omni-directional antenna. In some other embodiments (not shown) of the sensor, an antenna array is provided instead. In consequence, the sensor coverage area is shaped by adjusting the total transmit power and the weights feeding each antenna array element, for example to improve the number of detections. Also, further fine tuning of total power and weights can be performed to reduce the number of multiple detections of a user terminal in idle mode. Furthermore, as vehicles with user terminals in active mode pass the sensor, the antenna array can actively steer the sensor coverage away from the active user terminal. In consequence the sensor will be transmitting for a longer time overall so the proportion of vehicles detected will increase.

Some other embodiments involve the use of directional antennas, for example in place of an omni-directional antenna, at the sensor. This enables Doppler Effect to be used to determine direction of travel of vehicles in which a user terminal is carried. The radio frequency received from the user terminal changes depending upon whether the user terminal is moving towards or away from the sensor.

### General

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

## Claims

1. A method of a sensor detecting a user terminal that is in idle mode connected to a base station in a location area, the method comprising:
the user terminal moving into the coverage area of the sensor,
the sensor transmitting a signal that triggers a request from the user terminal for location area update,
the sensor responding with a request for the identifier of the user terminal,
the user terminal sending its identifier in reply,
the sensor recording the identifier and not completing the location area update so that the user terminal remains connected to the base station.

2. A method according to claim 1, in which the identifier is a Temporary Mobile Subscriber Identity, TMSI, or International Mobile Subscriber Identity, IMSI.

3. A method according to claim 1, in which the sensor includes a transmitter having a unique transmission characteristic and said transmission characteristic is the identifier.

4. A method according to any preceding claim, in which the number of identifiers of different user terminals recorded in a given time interval provides an estimate of traffic flow.

5. A method according to any preceding claim, in which the user terminal is detected repeatedly over time whilst in the sensor coverage area and the number of detections made as the user terminal travels through the coverage area is used to determine an estimate of its travel speed.

6. A method according to any preceding claim, in which upon a user terminal in active call connection with a base station being detected as entering the sensor coverage area, the sensor is controlled to change its operation.

7. A method according to claim 6, in which the sensor is controlled to not transmit so as to avoid causing interference to the user terminal's active mode connection.

8. A method according to claim 6, in which the sensor comprises an antenna array and is controlled to adjust the coverage area so as to avoid the user terminal in active mode connection.

9. A method according to any of claims 6 to 8, in which the sensor detects a rise in received signal that the sensor receives to above a given noise threshold as an indication that the user terminal in active mode connection has entered the sensor coverage area.

10. A method according to any preceding claim, in which, in response to receiving the identifier, the sensor sends a message indicating a busy status to the user terminal so the location area update is not completed.

11. A sensor for user terminal traffic comprising a transmitter, a receiver and a processor,
the transmitter being configured to send a signal triggering a location area update request from the user terminal that is in idle mode connected to a base station and moving into the coverage area of the sensor,
the receiver being configured to receive the location area update request and to control the transmitter to send a request for an identifier of the user terminal,
the receiver being configured to receive the user terminal identifier in reply, the processor being configured to record the identifier, and
the sensor not completing the location area update such that the user terminal remains connected to the base station.

12. A sensor according to claim 11, in which the processor comprising a noise detector configured to detect a rise in received signal that the sensor receives to above a given noise threshold as an indication that a user terminal in active mode connection has entered the sensor coverage area.

13. A sensor according to claim 11 or 12, in which upon a user terminal in active call connection with a base station being detected as entering the sensor coverage area, the sensor is controlled to not transmit so as to avoid causing interference to the user terminal's active mode connection.

14. A sensor according to claim 13, in which the processor also includes a controller configured to prevent the transmitter transmitting whilst the user terminal in active mode is detected as being in the sensor coverage area.

15. A sensor according to claim 11 or claim 12, in which the sensor comprises an antenna array and is controlled to adapt the coverage area so as to avoid a user terminal in active mode connection whilst providing coverage.

## Amended claims

### Amended claims in accordance with Rule 137(2) EPC.

**1.** A method of a sensor (14) detecting a user terminal (22) that is in idle mode connected to a base station in a location area, the method comprising:
the user terminal moving into the coverage area (17) of the sensor,
the sensor transmitting a signal that triggers a request (Fig 3:c) from the user terminal for location area update,
the sensor responding (Fig 3:d) with a request for the identifier of the user terminal,
the user terminal sending (Fig 3:e) its identifier in reply,
the sensor recording the identifier and not completing (Fig 3:f) the location area update so that the user terminal remains connected to the base station, **characterised in that**
upon a user terminal (22) in active mode connection with a base station being detected as entering the sensor coverage area (17), the sensor (14) is controlled (36) to change its operation; and
in which the sensor detects a rise in received signal that the sensor receives to above a given noise threshold (34) as an indication that the user terminal in active mode connection has entered the sensor coverage area.

**2.** A method according to claim 1, in which the identifier is a Temporary Mobile Subscriber Identity, TMSI, or International Mobile Subscriber Identity, IMSI.

**3.** A method according to claim 1, in which the user terminal (22) includes a transmitter having a unique transmission characteristic and said transmission characteristic is the identifier.

**4.** A method according to any preceding claim, in which the number of identifiers of different user terminals recorded in a given time interval provides an estimate of traffic flow.

**5.** A method according to any preceding claim, in which the user terminal is detected repeatedly over time whilst in the sensor coverage area and the number of detections made as the user terminal travels through the coverage area is used to determine an estimate of its travel speed.

**6.** A method according to claim 5, in which the sensor (14) is controlled (36,28) to not transmit so as to avoid causing interference to the user terminal's active mode connection.

**7.** A method according to claim 5, in which the sensor comprises an antenna array and is controlled to adjust the coverage area so as to avoid the user terminal in active mode connection.

**8.** A method according to any preceding claim, in which, in response to receiving the identifier, the sensor sends a message indicating a busy status to the user terminal so the location area update is not completed.

**9.** A sensor (14) for user terminal traffic comprising a transmitter (28), a receiver (26) and a processor (32),
the transmitter (28) being configured to send a signal triggering a location area update request from a user terminal (22) that is in idle mode connected to a base station and moving into the coverage area (17) of the sensor,
the receiver (26) being configured to receive the location area update request (Fig 3:c) and to control the transmitter to send (Fig 3:d) a request for an identifier of the user terminal,
the receiver (26) being configured to receive (Fig 3:e) the user terminal identifier in reply,
the processor (32) being configured to record the identifier, and
the sensor (14) is configured to not completing the location area update such that the user terminal remains connected to the base station **characterised in that**
the processor comprising a noise detector (34) configured to detect a rise in received signal that the sensor receives to above a given noise threshold as an indication that a user terminal in active mode connection has entered the sensor coverage area; and
upon a user terminal (22) in active mode connection with a base station being detected as entering the sensor coverage area (17), the sensor is controlled to change its operation.

**10.** A sensor according to claim 9, in which the sensor is adapted (34,36) to be controlled, upon a user terminal in active mode connection with a base station being detected as entering the sensor coverage area, to not transmit so as to avoid causing interference to the user terminal's active call connection.

**11.** A sensor according to claim 10, in which the processor (32) also includes a controller (36) configured to prevent the transmitter transmitting whilst the user terminal in active mode connection is detected as being in the sensor coverage area.

**12.** A sensor according to claim 9, in which the sensor comprises an antenna array and is controlled to adapt the coverage area so as to avoid a user terminal in active mode connection whilst providing coverage.
